# EUROPEAN PATENT APPLICATION

(11) **EP 3 018 555 A1**
(43) Date of publication of application: **11.05.2016**
(21) Application number: 14382444.9
(22) Date of filing: 07.11.2014
(51) Int. Cl.: G06F 1/16, H04M 1/02

(54) **Coupling device**

(71) Applicant: Martinez Marcos, Alfredo, 28028 Madrid (ES)
(72) Inventor: Martinez Marcos, Alfredo, 28028 Madrid (ES)
(74) Representative: ABG Patentes, S.L.

(57) **Abstract**

The present invention relates to a device for coupling at least two elements (2.1, 2.2, 2.3), comprising a first casing (1.1) intended to be attached to a first element (2.1), with guiding means comprising a sliding guide providing a sliding travel path, a second casing (1.2) intended to be attached to a second element (2.2) and casing connection means, comprising a connecting element with a first end pivotally arranged in the sliding guide of the first casing and slidably arranged along the sliding travel path, and a second end pivotally fixed to the second casing, the coupling device being equipped with binding means adapted to prevent rotation of the connecting element on its first end during the sliding travel path, wherein in a start of travel position of the connecting element on the sliding guide, the casings are arranged one after the other in a first direction ie. stacked, and in an end of travel position, the rotation of the connecting element allows movement of the first casing (1.1) to at least a position in which the casings are arranged in a substantially coplanar manner one after the other in a second direction.

## Description

### Object of the Invention

The present invention relates to a coupling device which allows attaching two or more separate elements to one another to obtain a foldable and expandable end product formed by said elements.

The present invention can be applied to all those technical fields in which it can be used, such as, for example, the technological field, said field being the preferred application, particularly for coupling two or more screens; the architectural field for coupling windows, sliding doors or separating panels in rooms; or the energy field, applied for coupling solar panels to modify power generation at will according to existing needs.

### Background of the Invention

Document US20100064244A1 discloses a device for coupling three electronic screens by means of hinged attachments. This device does not allow controlled positioning of the screens, so said screens may hit and rub against one another.

### Description of the Invention

The present invention solves the mentioned technical problem by means of a coupling device according to claim 1. The dependent claims define preferred embodiments of the invention.

The present invention provides a coupling device for coupling at least two elements, comprising:
a first casing intended to be attached to a first element and comprising guiding means, where the guiding means comprise a sliding guide providing a sliding travel path,
a second casing intended to be attached to a second element, and
casing connection means comprising a connecting element having a first end pivotally arranged in the sliding guide of the first casing and slidably arranged along the sliding travel path, and a second end pivotally fixed to the second casing, the coupling device being equipped with binding means adapted to prevent rotation of the connecting element on its first end during the sliding travel path,
wherein:
in a start of travel position of the connecting element on the sliding guide, the first casing and second casing are arranged one after the other in a first stacking direction (z), giving rise to a folded configuration of the coupling device, and
in an end of travel position of the connecting element on the sliding guide, the rotation of the connecting element on its first end and second end allows movement of the second casing to at least a position in which the first casing and second casing are arranged in a substantially coplanar manner one after the other in a second direction (x), giving rise to an expanded configuration of the coupling device.

By means of the device of the invention, it is possible to couple at least two elements in a configurable manner such that it can have a folded configuration, in which the elements are stacked on top of one another, and an expanded configuration, in which the elements are arranged in a substantially coplanar position, giving rise to a larger element, made up of the plurality of individual elements arranged one after the other.

In the context of the present invention it will be understood that a casing "intended to be attached" to an element includes both the option of a casing integrally attached to the element forming a single part therewith, and the option of a casing that is separate from the element, suitable for being attached to it by suitable fixing means.

The coupling device of the invention is valid for coupling a number n of elements, with n ≥ 2. In each case, the coupling device will have as many casings n as elements to be coupled and (n-1) casing connection means. Each casing is intended to be attached to an element. The casing connection means provide the connection between contiguous casings.

Each casing comprises guiding means, where the guiding means comprise a sliding guide providing a sliding travel path, or travel along which the corresponding connecting element can slide. The last casing of the coupling device can be lacking guiding means as coupling thereof to an additional casing is unnecessary. Alternatively, the last casing of the coupling device can be equipped with guiding means to allow the subsequent connection thereof with additional casings.

The casings advantageously provide protection for the inner elements of the device against blows and environmental agents and give the end product aesthetic appeal.

Each casing connection means comprise at least one connecting element having a first end pivotally arranged in the sliding guide of a casing and slidably arranged along the sliding travel path. The coupling device is equipped with binding means adapted to prevent rotation of each connecting element on its first end during the sliding travel path, such that the connecting element has a limited capacity for rotating on its first end until it reaches the end of travel position, where it is free to rotate on its first end. Furthermore, the connecting element has a second end pivotally fixed to the next casing.

Each casing is connected with the next casing by means of at least one connecting element, such that
in a start of travel position of the at least one connecting element of the i-th connection means on the corresponding sliding guide, the i-th and (i+1)-th casings, connected by means of said connecting element, are arranged one after the other in a first direction (z), giving rise to the folded or stacked configuration of said casings, and
in an end of travel position of the at least one connecting element of the i-th connection means on the corresponding sliding guide, the rotation of the connecting element on its first end and second end allows movement of the (i+1)-th casing to at least a position in which the i-th and (i+1)-th casings are arranged one after the other in a second direction (x), in which the casings are arranged in an expanded configuration of said casings in a substantially coplanar manner.

In the cases in which the coupling device comprises more than two casings, in addition to a folded configuration and a completely expanded configuration there is a series of intermediate partially expanded configurations, with some casings in the expanded position and others in the stacked position.

The present invention advantageously provides a coupling device assuring more controlled positioning of the coupled elements and preventing the elements in any configuration of the device, even in intermediate positions, from rubbing against each other.

The coupling device of the invention is of particular interest for coupling screens, screen being understood as a content display device such as a mobile telephone, e-book, tablet, television, computer screen, or DVD player with a built-in screen. In that case, the device of the invention allows attaching n screens that are autonomous and separate from one another to obtain a foldable and expandable end product formed by n individual screens. The set of screens can be put in communication with one another to work like a single screen in an expanded configuration using means known by the person skilled in the art which are not the object of the present invention. The application of the coupling device for coupling screens makes said screens more versatile, allowing modifying and/or increasing their use and operation according to user's needs.

The coupling device of the present invention can also be applied for coupling another type of elements. Examples of elements that can be coupled by means of the coupling device of the invention are sliding windows, sliding doors or sliding architectural separating panels in rooms, in addition to the screens mentioned above. Another possible application of the coupling device of the invention is for coupling several solar panels, with the possibilities of arranging them in the folded or expanded configuration. It is therefore possible to arrange the panels in the folded configuration to minimize visual impact on the landscape or as a measure to protect the panels against atmospheric agents and material wear, whereas it is possible to arrange said panels in the expanded configuration in situations in which maximum solar capture of the entire available surface of the panels is desired.

As mentioned, the casings can be integrally attached with the elements to be coupled, such that each casing forms a single part with the corresponding element. Alternatively, when the casings and elements to be coupled are separate parts, in a use situation of the coupling device, in which the casings are attached to the elements that are to be coupled to one another, casings and elements can be attached or fixed using means suited to that purpose, such as press fit, matching tab and groove systems provided in casings and elements, adhesive means, etc.

In one embodiment of the coupling device of the invention, the connecting element is a connecting rod pivotally connected at its first end to the casing by means of a first shaft, slidably arranged on the sliding guide and pivotally fixed at its second end to the contiguous casing by means of a second shaft.

In one embodiment of the coupling device of the invention, the guiding means comprise a second sliding guide parallel to the first sliding guide and providing a sliding travel path, and the casing connection means comprise a second connecting element having a first end pivotally arranged in the second sliding guide of the casing and slidably arranged along the sliding travel path thereof, and a second end pivotally fixed to the next casing. The coupling device is equipped with binding means adapted to prevent rotation of the second connecting element during the sliding travel path. The second connecting element is fixed to the next casing at a point that is shifted in the direction defined by the sliding guides in relation to the fixing point for fixing the first connecting element in said casing. In this embodiment, the two connecting elements of the connection means are fixed to one another such that they slide simultaneously on the respective sliding guides of a casing and with relative shifting of a connecting element with respect to the other in the direction defined by the sliding guides. In one embodiment, the two connecting elements of the casing connection means are connecting rods connected to one another by means of a dual shaft, the two shafts of which provide relative separation between the connecting rods in the direction defined by the sliding guides. Preferably, the connection means additionally comprise two side fastening elements, one of which being coupled to each shaft of the dual shaft, after the corresponding connecting rod.

In one embodiment of the coupling device of the invention, the sliding guide comprises a groove and at least one edge for supporting the first end of the corresponding connecting element. The connecting element is arranged going through the groove, along which groove it shifts with its first end supported on the edge. The connecting element can be adapted to be supported on said edge by means of an intermediate element, such as a shaft or a side fastening element.

In one embodiment of the coupling device of the invention, the binding means adapted to prevent rotation of the connecting element during the sliding travel path comprise a channel provided in the connecting element and a track provided in the casing, the track being configured for being inserted in said channel, such that during the sliding travel path the movement of the connecting element is limited to the direction defined by the track. This embodiment advantageously prevents unwanted vertical movement of the casings in the folded position, and a minimum gap between the coupled elements is assured in the folded configuration, which prevents them from rubbing against each other.

In one embodiment, the coupling device of the invention comprises fixing means configured for fixing contiguous casings when they are in the expanded configuration. In one embodiment, the fixing means comprise a fixing channel made in the connecting element and a fixing projection provided in the casing to which the first end of the connecting element is fixed, such that inserting the fixing projection into the fixing channel prevents rotation of the connecting element with respect to its first end.

In one embodiment of the coupling device of the invention, at least one and preferably all of the casings to which the first end of a connecting element is fixed comprise holding means for holding the connecting element in a start of travel position. In one embodiment, the holding means comprise at least one rib arranged in the sliding guide. Advantageously, providing holding means for holding the connecting elements in the start of travel position allow holding the casings in the stacked position by means of tightening, preventing unwanted sliding.

In one embodiment of the coupling device of the invention, at least one and preferably all of the casings to which the second end of a connecting element is fixed comprise a guiding groove, a spiral spring and a sliding cover, the sliding cover being arranged slidably along the guiding groove and coupled to the spiral spring, the spiral spring being fixed to the casing by means of a shaft at a point arranged in relation to the fixing point of the second end of the connecting element, such that the sliding cover is interposed in the path of rotation of the connecting element on its second end, and the spiral spring being preloaded to apply force towards a closed position, in which the sliding cover is arranged covering the second end of the connecting element. In this embodiment, in the movement for expanding the casings the connecting element allows the sliding cover to reach the closed position due to the action of the spiral spring. In the movement for drawing in the casings, the sliding cover is pushed by the connecting element until it reaches its initial, preloaded position. The spiral spring applies the greatest force in this position so that the sliding cover will always be biased towards the closed position. The sliding cover advantageously protects and conceals the inner elements of the device, in addition to giving the product certain aesthetic appeal.

In one embodiment of the coupling device, at least one of the casings is configured in the form of two separate mutually connectable parts. Therefore it is advantageously easier to mount the inner elements of the device inside the casing. In this embodiment, the two connectable parts forming the casing can include means for detachably fixing the two parts to one another, such that the parts can be fixed together and separated from one another once again to allow replacing inner elements in case of deterioration.

A second inventive aspect of the invention relates to a system comprising a coupling device according to the first inventive aspect and at least two elements, wherein the number of casings of the coupling device is equal to the number of elements, and wherein each casing of the coupling device is attached to one of the elements at a first end thereof.

The system preferably comprises two coupling devices according to the first inventive aspect and at least two elements, wherein the number of casings of each coupling device is equal to the number of elements, and wherein each casing of one of the coupling devices is attached to one of the elements at a first end thereof and each casing of the other coupling device is attached to one of the elements at the end of the element opposite the first end.

The coupling device is preferably intended for coupling plate-shaped elements, plate-shaped element being understood as an element having a small thickness in relation to its other two dimensions. Preferably, the plate-shaped element is substantially planar, and the sliding travel path, or travel along which the connecting element can slide, is substantially straight.

The folded configuration of the device generally corresponds to a situation in which the elements are arranged one after the other in the direction defined by the thickness of said elements, whereas the expanded configuration of the device corresponds to the situation in which the elements are in a substantially coplanar position, i.e., their surfaces having the largest area being arranged substantially in one and the same plane.

In the system of the invention, the casings and the elements to be coupled can be attached forming a single part or can be separate and be attached to one another by suitable fixing means.

In one embodiment of the system, at least one of the casings forms a single part with the element to which it is attached.

In one embodiment of the system in which a coupling device has at least one of the casings configured in the form of two separate mutually connectable parts, a first part of the casing is a prolongation of the element to which it is attached and forms a single part with it.

In an alternative embodiment, at least one of the casings of the coupling device is separate from the corresponding element and is attached to it by suitable fixing means. The fixing means between casings of the device and the elements to be coupled can be of the type that allows detachable fixing.

Preferably, in one embodiment of the system in which the elements are screens, the fixing between the coupling device and the screens is such that the coupling device does not have to be separated from the screens to access the inner elements of the screens.

All the features and/or the steps of methods described in this specification (including the claims, description and drawings) can be combined in any combination, with the exception of those combinations of such mutually exclusive features.

### Description of the Drawings

The foregoing and other features and advantages of the invention will be more clearly understood based on the following detailed description of a preferred embodiment given only by way of illustrative and non-limiting example in reference to the attached drawings.
Figure 1 shows a system including two coupling devices according to the invention and three screens coupled by means of said devices, in a folded configuration.
Figure 2 shows the system of Figure 1 in a partially expanded configuration.
Figure 3 shows the system of Figures 1 and 2 in an expanded configuration.
Figure 4 shows the first casing of one of the coupling devices of Figures 1 to 3.
Figure 5 shows a view of a part of the first casing of Figure 4.
Figure 6 shows an embodiment of the casing connection means.
Figure 7 shows two views of a connecting rod included in one embodiment of the casing connection means.
Figure 8 shows two views of a connecting rod included in one embodiment of the casing connection means.
Figure 9 shows a dual shaft present in one embodiment of the casing connection means.
Figure 10 shows a view of a part of the first casing according to an embodiment of the device of the invention.
Figure 11 shows the second casing of one of the coupling devices of Figures 1 to 3.
Figure 12 shows a view of a part of the second casing of Figure 11.
Figure 13 shows the third casing of one of the coupling devices of Figures 1 to 3.
Figure 14 shows a view of a part of the third casing of Figure 13.
Figure 15 shows a part of a casing according to an embodiment of the coupling device and a detailed view thereof.
Figure 16 shows a longitudinal section view of one of the coupling devices of Figures 1-3.
Figures 17 to 21 show enlarged views of a coupling device according to the invention in a use situation in which it is coupled to three screens, in five different positions.
Figures 22 and 23 show two systems each including two coupling devices according to the invention fixed to two and four screens, respectively.

### Detailed Description of the Invention

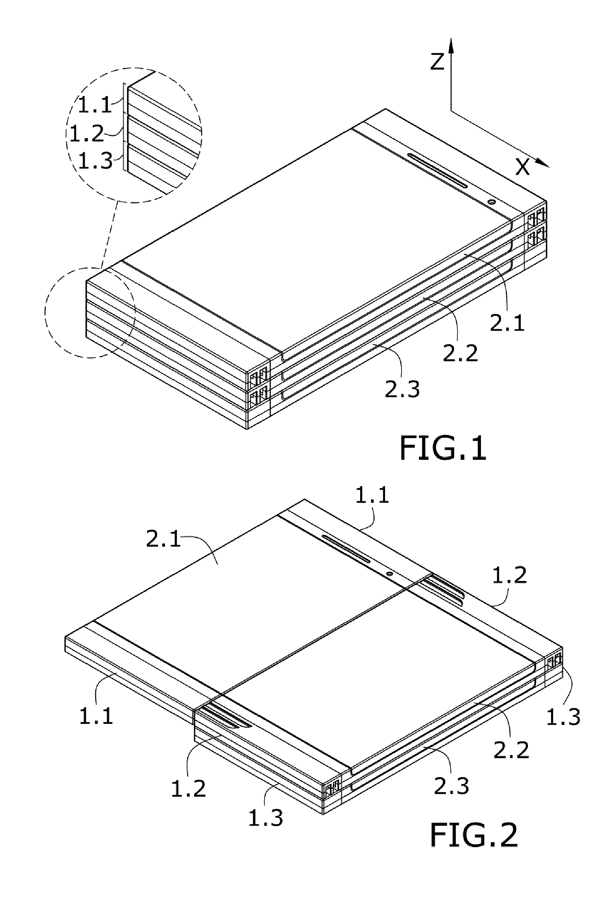

Figures 1 to 3 show a system formed by two coupling devices according to an embodiment of the invention and three screens (2.1, 2.2, 2.3) coupled to one another by means of said coupling devices. The drawings show the two coupling devices, fixed at opposite ends of the screens. Each coupling device has three casings (1.1, 1.2, 1.3), each casing being attached to one of the screens.

In Figure 1 the coupling devices are in a folded configuration in which the screens are stacked one after the other in a direction (z) which in the drawing corresponds to the vertical direction, i.e., arranged on top of one another. In Figure 2 the coupling devices are in a partially expanded configuration in which the first casing (1.1) of each coupling device is located in a lateral arrangement with respect to the second casing (1.2), and the third casing (1.3) is arranged below the second casing (1.2).

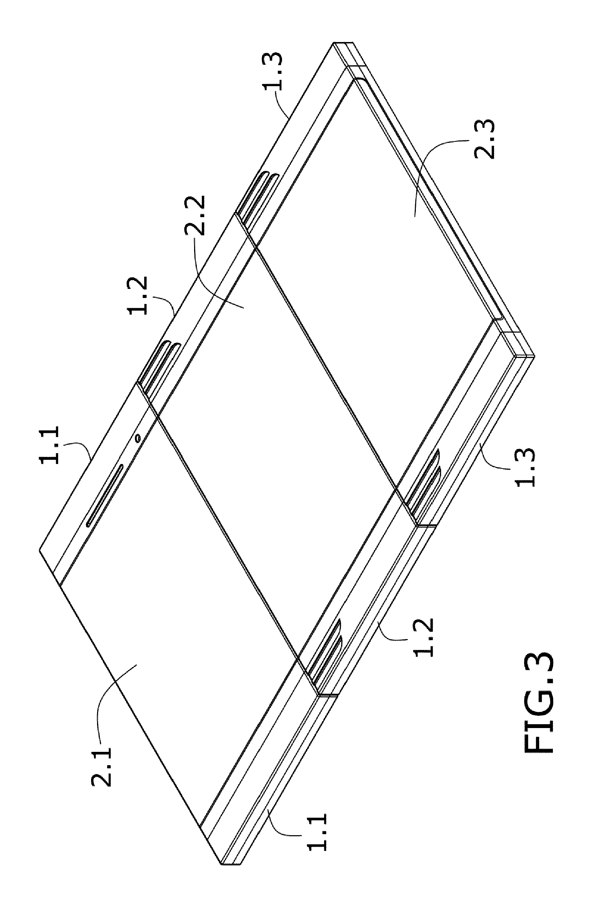

Figure 3 shows a completely expanded configuration of the system, in which the three casings (1.1, 1.2, 1.3) of each coupling device are located one after the other in a second direction (x) which in the drawing corresponds to a lateral direction. In this position of the coupling devices, the screens are arranged one after the other in a substantially coplanar manner, giving rise to a larger screen.

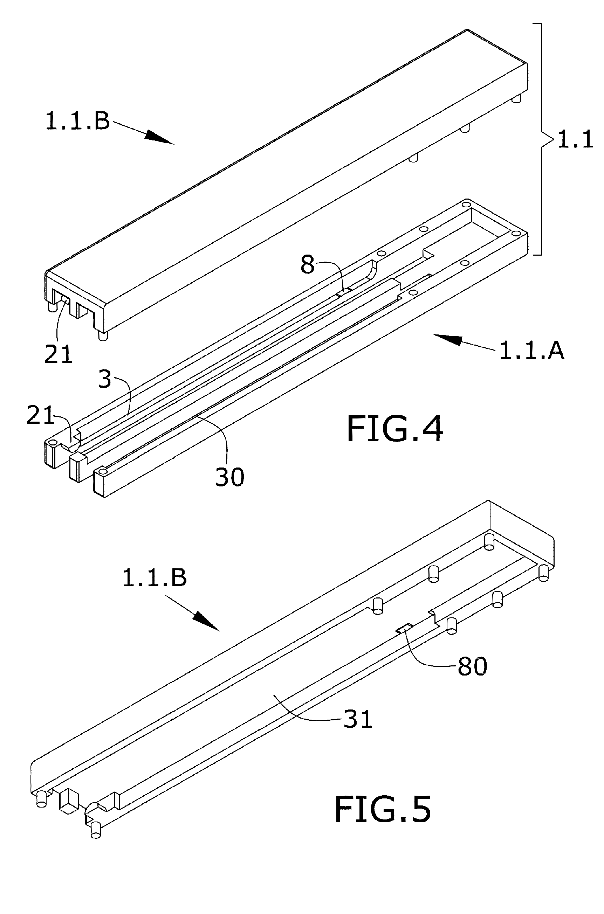

To better see the elements included in the coupling devices of Figures 1 to 3, said elements are depicted alone in Figures 4 to 15.

Figure 4 shows an embodiment of the first casing (1.1) having two sliding guides (3, 30), each one in this embodiment comprising a groove with an edge adapted for supporting the first end of a connecting element thereon. The sliding guides (3, 30) and the connecting elements are adapted such that each connecting element is capable of sliding on a sliding guide along a travel path of the sliding guide. The two sliding guides (3, 30) are parallel and substantially straight and define the sliding direction (x).

In this embodiment of the coupling device, the first casing (1.1) is configured in the form of two parts (1.1.A, 1.1.B) mutually connectable to give rise to the complete casing. To that end, one of the parts (1.1.B) has projections adapted to fit in corresponding holes in the other part (1.1.A). Any other means of attachment between the two parts, such as fixing by means of tabs, is possible in the embodiment in which the casings are configured in two parts.

A rib (8) acting as holding means for holding the connecting element (4, 40) in a start of travel position is preferably provided in at least one of the sliding guides (3, 30). The rib (8) is configured such that it is capable of holding the connecting element (4, 40) in the start of travel position against unwanted sliding, while at the same time allows the passage of the connecting element (4, 40) when enough force to overcome the rib (8) is applied.

In this embodiment, the upper wall of the casing forms an upper wall (31) shared by the two sliding guides (3, 30), preventing movement of the first end of the connecting element arranged in the sliding guide (3, 30) in the direction for the attachment of the two parts of the casing (1.1) which in Figure 4 is the vertical direction (z). The casing (1.1) furthermore has a side wall adjacent to each sliding guide. It is thereby assured that the degrees of freedom in the movement of the first ends of the connecting elements are limited to the direction defined by the sliding guides (3, 30). In Figure 5, which shows a bottom perspective view of the upper part (1.1.B) of the first casing (1.1), it can be seen that the upper wall (31) of the sliding guides (3, 30) in this embodiment has respective additional ribs (80) for holding the corresponding connecting element (4, 40) in the start of travel position. The two ribs (8, 80) provided, respectively, on the edge and in the upper wall (31) of a sliding guide (3, 30) are arranged at the same height in the sliding travel path to jointly hold the corresponding connecting element.

In other embodiments, the sliding guide (3, 30) can include a single rib, provided on the edge or in the upper wall (31) of the sliding guide (3, 30). The at least one rib (8, 80) can be present in one or in both sliding guides (3, 30). At least between one and four ribs can therefore be provided per casing for holding the connection means in the start of travel position. In the embodiment shown in Figures 4 and 5, there is a rib (8) on the edge of each sliding guide (3, 30) and two ribs (80) in the upper wall (31) in the start of travel position.

In one embodiment, the sliding guides (3, 30) can additionally or alternatively include second holding means, preferably in the form of ribs, for holding the first end of at least one connecting element in an end of travel position. Greater comfort when folding or expanding the casings is advantageously allowed by means of said ribs in the end of travel position, because a rotation without sliding of the connecting element on its first end is assured upon reaching the end of travel.

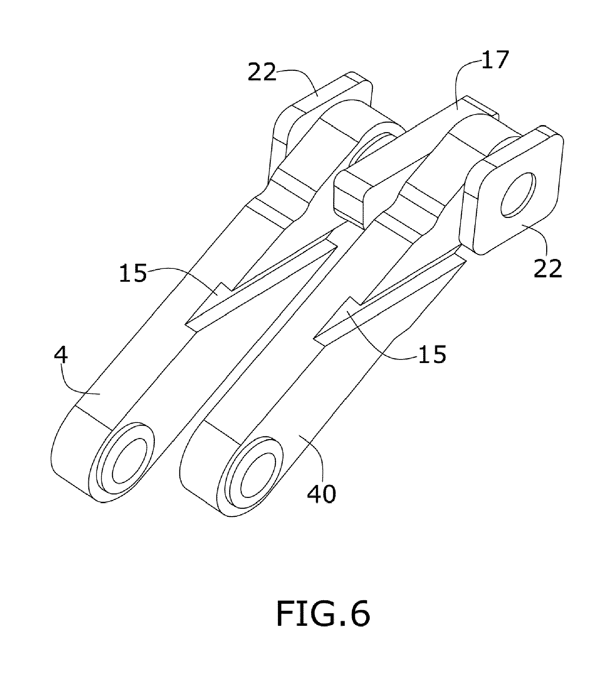

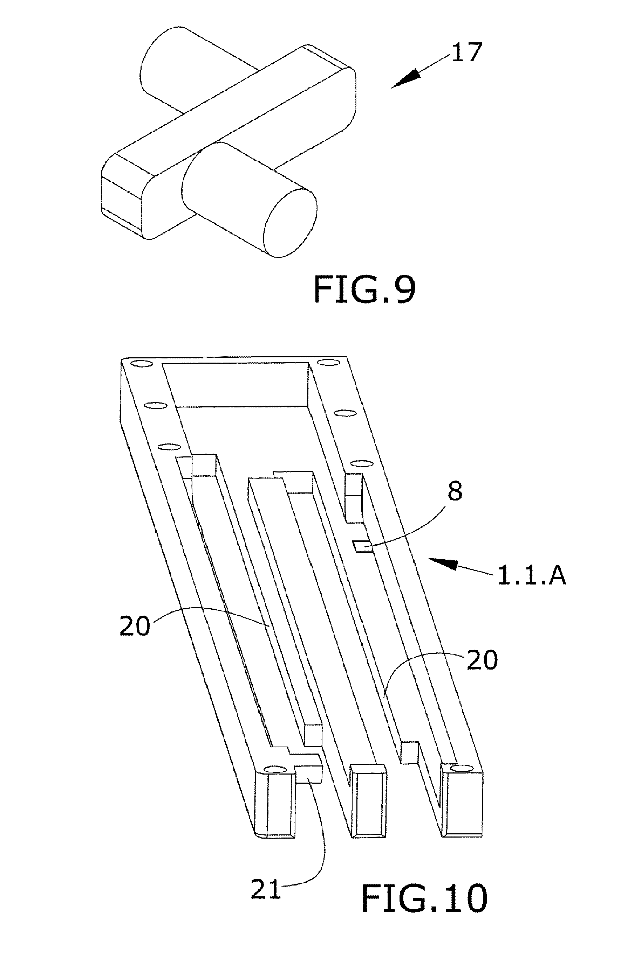

Figure 6 shows an embodiment of casing connection means comprising two connecting elements (4, 40), in this case connecting rods, one for each sliding guide (3, 30) of the first casing (1.1). The connecting rods (4, 40) are fixed to one another by means of a dual shaft (17) depicted by itself in Figure 9. Each connecting rod (4, 40) is mounted in one of the shafts of the dual shaft (17) with the capacity to rotate on said shaft. The dual shaft (17) allows the connecting rods (4, 40) to shift at the same time and at the same linear speed along the path through the sliding guides (3, 30), with a gap between the connecting rods (4, 40) in the direction defined by the sliding guides. In this embodiment, the connection means additionally have two side fastening elements (22), one of which being coupled to each shaft of the dual shaft (17), after inserting the connecting rods (4, 40). The side fastening elements (22) slide together with the dual shaft (17) and the connecting rods (4, 40) through the sliding guides (3, 30) of the casing. The side fastening elements (22) advantageously serve as a stop so that the connecting rods do not shift transversely to the sliding direction (x), provide a sliding support in the sliding guide, provide a stop at the end of sliding travel path, and favor, in cooperation with the ribs (8, 80), the tightening hold of the assembly of connecting rods (4, 40) and dual shaft (17) in the start of travel position.

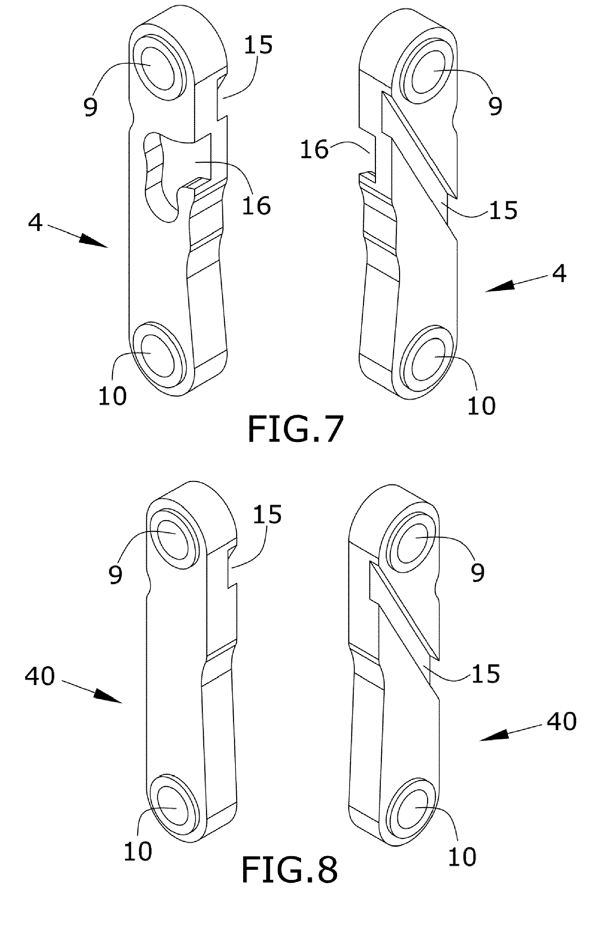

Figure 7 shows two perspective views of a first connecting element (4) of this embodiment, which is equipped with a fixing channel (16) for fixing two contiguous casings in the expanded configuration and with a channel (15) to limit movement of the connecting element (4) during its sliding travel path. The fixing channel (16) has a narrowing in an end area for holding a corresponding fixing element by tightening, as will be seen below.

Figure 8 shows two views of the second connecting element (40) of this embodiment, which is analogous to the first connecting element (4), except that it does not have a fixing channel (16) for fixing contiguous casings. In an alternative embodiment, the second connecting element (40) could also be equipped with a fixing channel (16) and the casing could have a second fixing projection (21) to provide firmer fixing of contiguous casings in the expanded configuration. This case is particularly advantageous in the event of coupling elements having a considerable weight, such as television screens.

Figures 7 and 8 show the first end (9) and second end (10) of the connecting elements (4, 40), each having a hole for inserting a shaft for the pivotal fixing with the corresponding casings.

Figure 9 depicts alone the dual shaft (17) included in the casing connection means of Figure 6. This drawing shows the two shafts to which the first ends (9) of the connecting elements (4, 40) are coupled. The two shafts of the dual shaft are arranged on parallel imaginary lines, providing the relative spacing of the two connecting elements (4, 40) in the direction of the sliding guides (3, 30) once mounted in the corresponding casing.

Figure 10 shows another view of one of the parts (1.1.A) forming the first casing (1.1) of Figure 4. In this embodiment, the first casing (1.1) has two tracks (20) having a thickness suitable for each one to be inserted in the channel (15) of the corresponding connecting element, such that during the sliding travel path the movement of the connecting elements (4, 40) is limited to the direction defined by the corresponding track (20). Figure 10 furthermore shows a fixing projection (21) provided at one end of the casing and suitable for being inserted into the fixing channel (16) of the corresponding connecting element, such that inserting the fixing projection (21) into the fixing channel (16) prevents rotation of the first connecting element (4) with respect to its first end (9), fixing the two casings to one another in the expanded configuration. In this embodiment, the fixing projection (21) is configured in two portions, each one being arranged in one of the parts (1.1.A, 1.1.B) forming the casing. Figure 4 shows the two portions of the fixing projection (21). The two portions of the fixing projection (21) form the complete projection when the two parts (1.1.A, 1.1.B) forming the casing are fixed to one another. The ribs (8) present in the sliding guides and described in reference to Figure 4 are also shown.

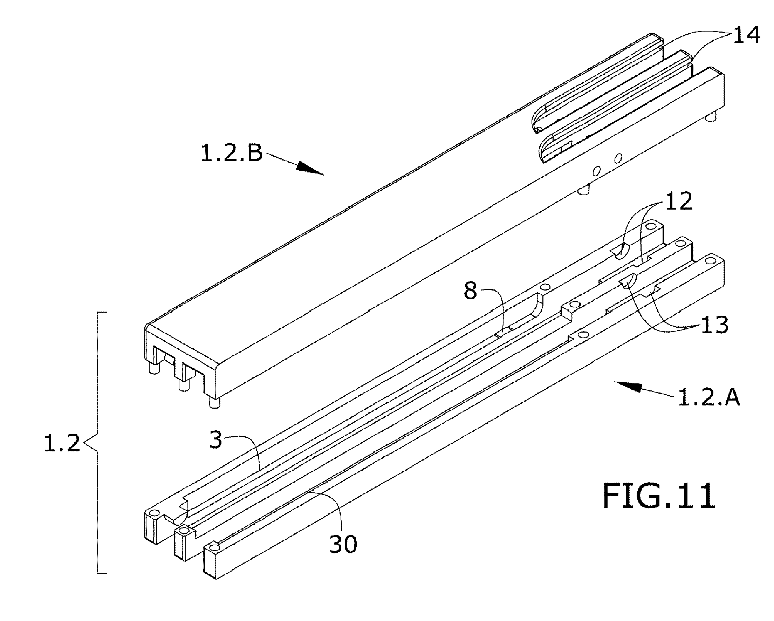

Figure 11 shows the second casing (1.2) of the coupling device. The second casing (1.2) has fixing means (12, 13) for fixing the second ends (10) of the connecting elements (4, 40) connecting it with the first casing (1.1). In this embodiment, said fixing means (12, 13) are in the form of recesses for housing the shaft inserted into the hole present at the second end (10) of each connecting element (4, 40). The fixing means (13) in a sliding guide are shifted in the direction defined by the sliding guides with respect to the fixing means (12) in the other sliding guide. As can be seen, the second casing (1.2) has sliding guides (3, 30) analogous to those described for the first casing. Though not seen in the drawing, the second casing (1.2) also has two tracks (20) like those described in relation to the first casing, for each one to be inserted in the channel (15) of the corresponding connecting element.

As in the case of the first casing (1.1), in this embodiment the second casing (1.2) and third casing (1.3) are also configured in the form of two separate parts (1.2.A, 1.2.B; 1.3.A, 1.3.B) mutually connectable to give rise to complete casings (1.2, 1.3).

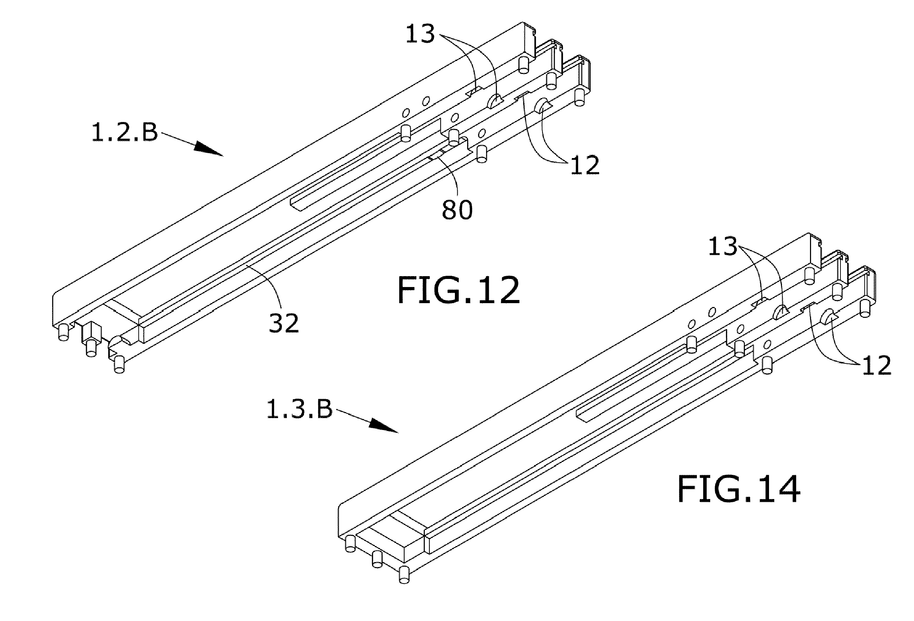

Figure 12 shows a bottom perspective view of the upper part (1.2.B) of the second casing (1.2). This view shows fixing means (12, 13) corresponding to those seen in the lower part (1.2.A) of the casing and which allow completely housing the shaft inserted in the hole present at the second end (10) of each connecting element when the two parts (1.2.A, 1.2.B) are coupled together. This view also shows an upper wall (32) of the sliding guide (3), arranged in the upper wall of the second casing (1.2), preventing movement of the first end of the connecting element arranged in the sliding guide in the direction for the attachment of the two parts of the casing (1.2.A, 1.2.B). In this embodiment, the upper wall (32) of the sliding guide has a second rib (80) which allows holding the corresponding connecting element in the start of travel position more securely. Though not shown in the drawing, in this embodiment the second sliding guide (30) of the casing (1.2) also has an upper wall (32) and a rib (80). The two ribs (8, 80) provided in a sliding guide (3, 30) are arranged at the same height in the sliding travel path to jointly hold the corresponding connecting element. Like in the case of the first casing, the second casing also has side walls adjacent to the sliding guides.

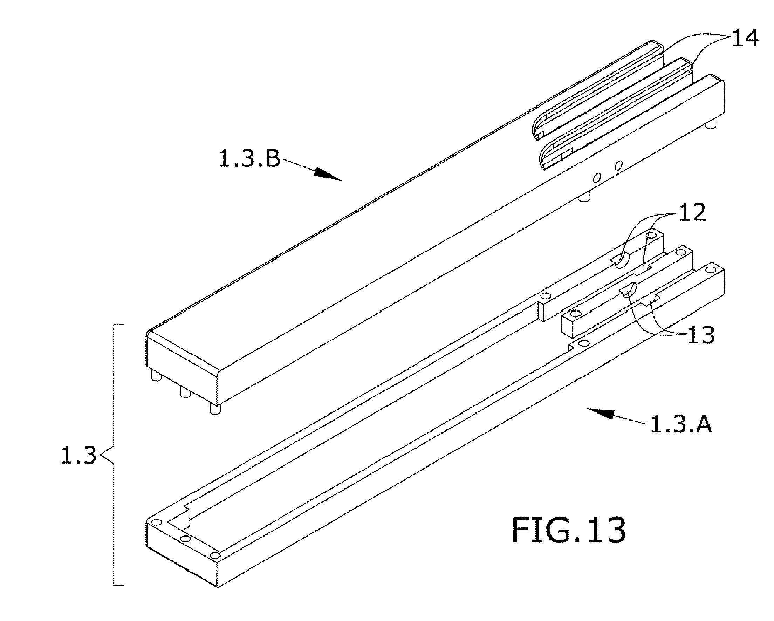

Figure 13 shows an embodiment of a third casing (1.3) which in this embodiment is the last casing of the coupling device. As in the second casing, the third casing (1.3) has fixing means (12, 13) for the connecting elements connecting it with the second casing (1.2). In this embodiment, the third casing (1.3) has no sliding guides.

Figure 14 shows a bottom perspective view of the upper part (1.3.B) of the third casing (1.3) of Figure 13. Like in the case of the second casing, fixing means (12, 13) can be seen in this part (1.3.B), corresponding to those seen in the lower part (1.3.A) of the casing (1.3) and which allow completely housing the shaft inserted in the hole present at the second end (10) of each connecting element when the two parts (1.3.A, 1.3.B) are coupled together.

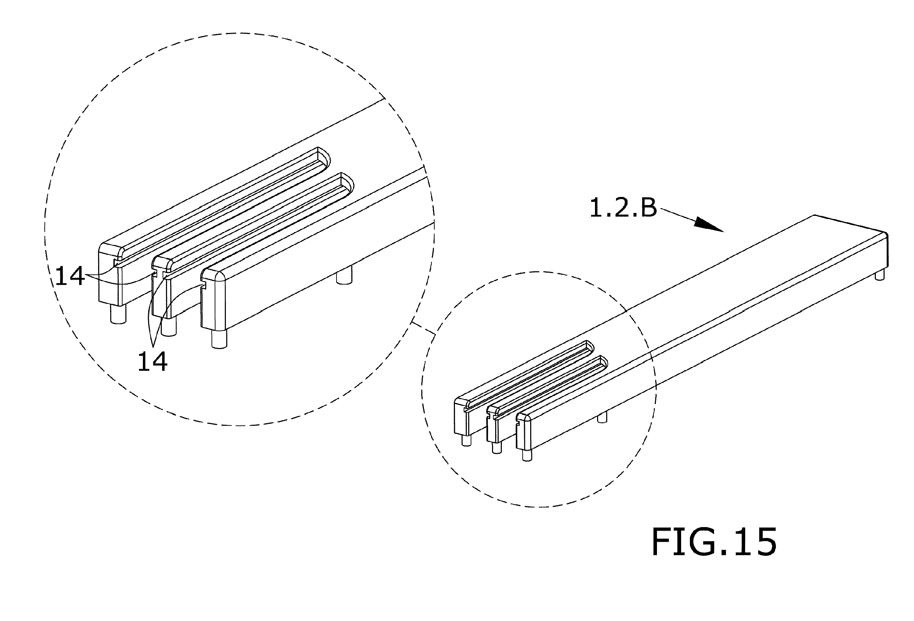

Figure 15 shows a detail of one of the parts (1.2.B) forming the second casing (1.2). As can be seen, in this embodiment the casing comprises a guiding groove (14) in each sliding guide suitable for housing a sliding cover (19).

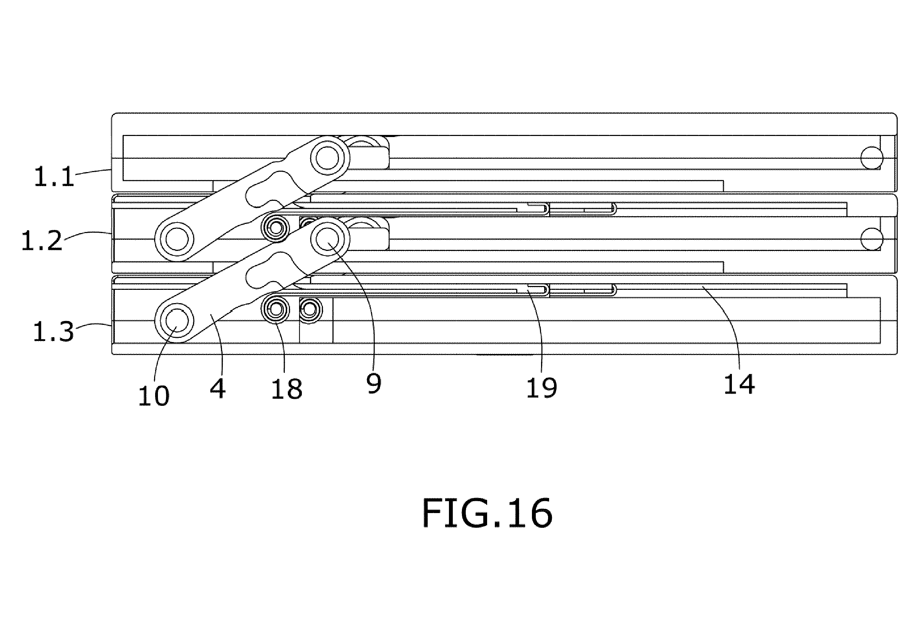

Figure 16 shows a longitudinal section view of a coupling device including the casings (1.1, 1.2, 1.3) and casing connection means described based on Figures 4 to 15, in the folded position. This drawing shows two sliding covers (19) provided in this embodiment in each of the second casing (1.2) and third casing (1.3), housed in each case in guiding grooves (14) like those shown in Figures 11, 13 and 15, such that the sliding covers (19) are able to slide along the guiding grooves (14). Each sliding cover (19) is coupled to a spiral spring (18), fixed to the corresponding casing by means of a shaft at a point arranged in relation to the fixing point of the second end (10) of the connecting element (4, 40), such that the sliding cover (19) is interposed in the path of rotation of the connecting element (4, 40) on its second end (10). The spiral spring (18) is preloaded to apply force towards a closed position, in which the cover (19) is arranged covering the second end (10) of the connecting element (4, 40).

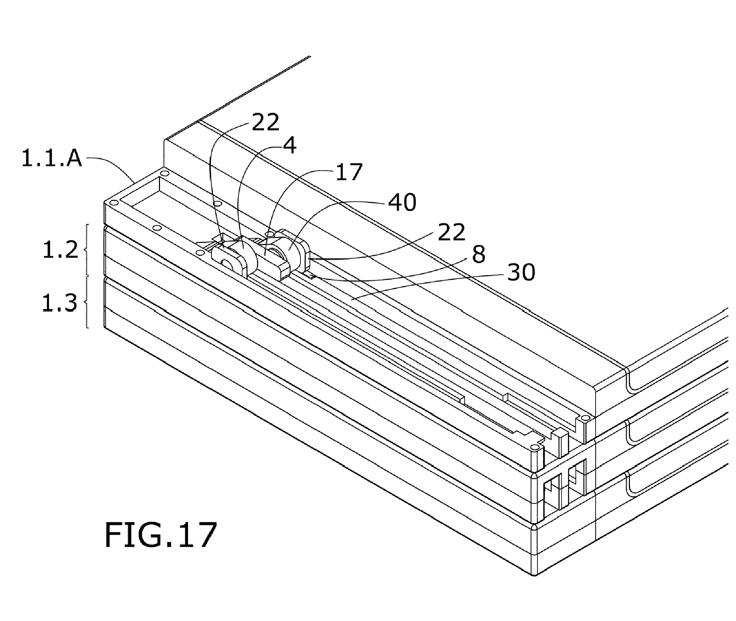

Figures 17 to 21 show five enlarged views of a coupling device according to the invention in a use situation in which it is coupled to three screens, in five different folding positions. The casings (1.1, 1.2, 1.3) and connection means of the coupling device correspond to those described in reference to the preceding figures. Figures 17 to 21 do not depict the upper part (1.1.B) of the first casing (1.1) in order to see the inner elements. Figure 17 shows a start of travel configuration. In this embodiment, the casing connection means include two connecting elements (4, 40) connected to one another by means of a dual shaft (17) and two side fastening elements (22), as described above. The first ends of the connecting elements (4, 40) are arranged supported on the sliding guides (3, 30) of the first casing (1.1) by means of the shafts of the dual shaft and the side fastening elements (22). The second ends of the connecting elements (4, 40) are fixed to the second casing (1.2) by means of shafts. In order to arrange the first casing (1.1) and second casing (1.2) in an expanded position, said casings are separated from one another in the sliding direction (x) defined by the sliding guides. The casing connection means slide through the sliding guides along the sliding travel path, driving the second casing (1.2) and third casing (1.3) with their movement.

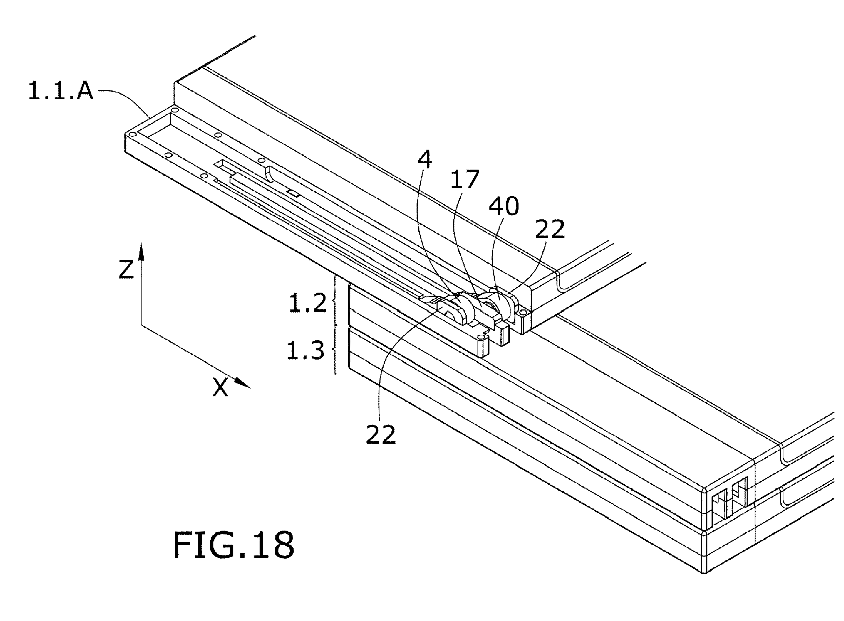

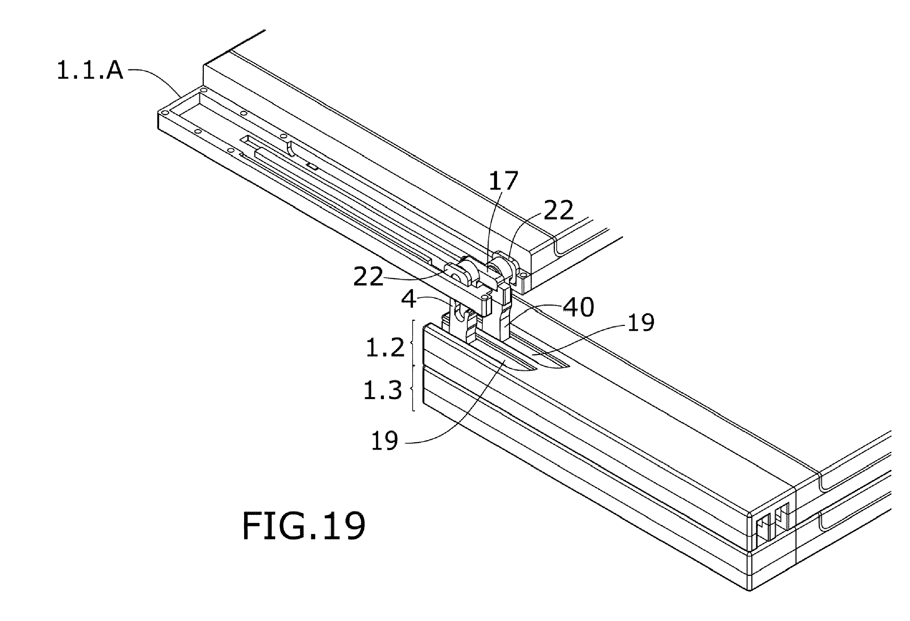

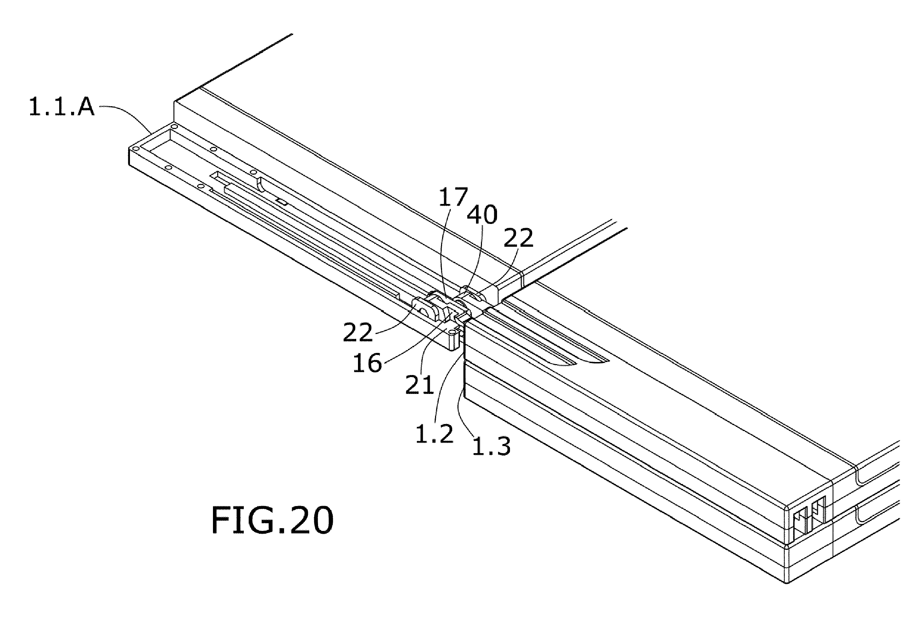

Figure 18 shows a configuration in which the casing connection means have reached the end of the sliding travel path, defined in this embodiment by the length of the edge of the sliding guides on which the side fastening elements (22) coupled to the first ends of the connecting elements are supported and slide. At the end of travel the side fastening elements (22) serve as a stop in the casing and the movement of the connecting elements (4, 40) is no longer restricted by the tracks (20). Therefore, if the first casing (1.1) and second casing (1.2) continue to separate from one another in the sliding direction (x), the connecting elements (4, 40) rotate on their first ends (9) and second ends (10), in the form of an articulated quadrilateral, causing movement of the second casing (1.2) to a position like that shown in Figure 19. It can also be seen in this drawing how the sliding covers (19) provided in the second casing (1.2) are biased to shift towards the connecting elements (4, 40) due to the force applied thereon by the preloaded springs (18). As the first casing (1.1) and second casing (1.2) continue to separate from one another, relative rotation between the connecting elements (4, 40) and the second casing (1.2) gives rise to the configuration of Figure 20.

Figure 20 shows the coupling device in a position in which the first casing (1.1) and second casing (1.2) of the coupling devices, as well as the first screen (2.1) and second screen (2.2), are in a substantially coplanar configuration. In this position, the first casing (1.1) and second casing (1.2) can be fixed to one another by means of inserting the complete fixing projection (21) provided at the end of the first casing (1.1) into the fixing channel (16) provided in the connecting element (4). It can be seen in the drawing that in this position of the coupling device, the sliding covers (19) are located above the connecting elements (4, 40) in the portion corresponding to the second casing (1.2), protecting the inner elements of the device in the expanded configuration and making the device more visually appealing.

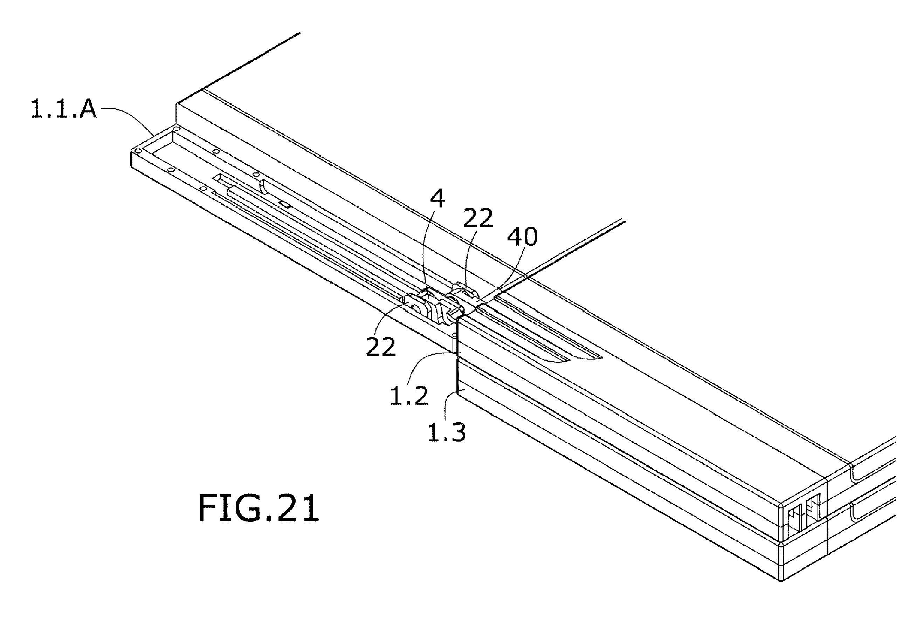

Figure 21 shows the final position, with the first casing (1.1) and second casing (1.2) fixed to one another as a result of the coupling by tightening between the fixing projection (21) and the narrowing located in the fixing channel (16) provided in the connecting element (4). From the position of Figure 21, the movement of the third casing (1.3) with respect to the second casing (1.2) would be analogous to that described in relation to the first casing and second casing, until reaching a completely expanded configuration.

The casings and screens can be attached to one another by suitable fixing means. The casings can alternatively be attached to the screens as an integral part thereof, i.e., forming a single part with them. Preferably, in one embodiment in which the casings of the coupling devices are configured in the form of two separate mutually connectable parts, a first part of the casing is a prolongation of the screen to which it is attached or of a front casing of the screen, forming a single part with it, and the second part of the casing is separate from the screen and remains attached to the set as a result of the fixing thereof to the first part of the casing, and optionally, also by fixing means for fixing with the screen. The casing can be equipped with a side wall in the area bordering the screen to isolate the components of the coupling device from the components of the screen. Separate access to the inner elements of the coupling device or to the inner elements of the screen is therefore advantageously allowed.

Despite the fact that the embodiments described in reference to preceding figures are for coupling three screens, any number of screens can be coupled together by means of the coupling device of the invention, provided that the coupling device has as many casings as there are screens to be coupled.

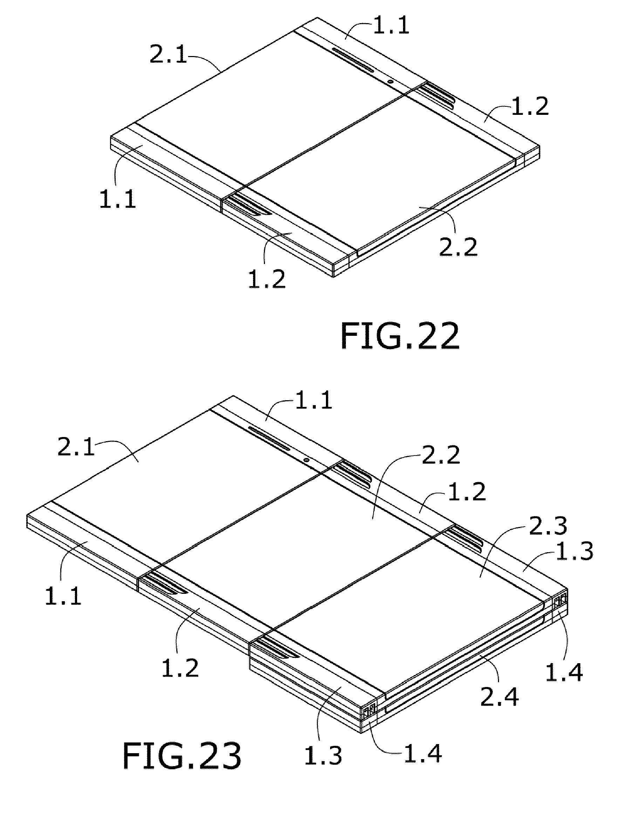

Figure 22 shows a system of two screens and two coupling devices according to the invention in an expanded configuration. In this case each coupling device includes two casings (1.1, 1.2), each one attached to a respective screen (2.1, 2.2). Similarly, Figure 23 shows a system of four screens (2.1, 2.2, 2.3, 2.4) coupled by means of two coupling devices according to the invention. The system is shown in a partially expanded configuration, with three expanded screens (2.1, 2.2, 2.3) and the fourth screen (2.4) in a folded situation. In this case each coupling device includes four casings (1.1, 1.2, 1.3, 1.4), each one connected to the corresponding screen.

Despite the fact that the embodiments described in reference to the drawings refer to the application of the coupling device for coupling screens, the coupling device of the invention can be applied for coupling elements of another type. In this sense, the coupling of sliding windows or doors to obtain a configurable system such that it can have a folded configuration, in which the windows or doors are arranged one after the other in the direction of the thickness of the doors or windows, and an expanded configuration in which the windows or doors are arranged one after the other, with their surfaces being substantially coplanar, can also be highlighted. Also, the application for coupling at least two solar panels, such that a solar panel having a surface that can be configured according to need, must be highlighted.

In reference to Figures 1 to 3, if the coupling devices shown were attached to windows instead of screens, Figure 1 would correspond to a folded configuration of the system, with the windows arranged in the position of maximum possible opening; Figure 2 would correspond to an intermediate configuration, with the windows arranged such that they take up two thirds of the surface that can be closed; and Figure 3 would correspond to the completely expanded configuration of the system, in which the windows are arranged with their areas being substantially coplanar, taking up the maximum surface that can be closed. The application for sliding doors and for sliding panels is analogous to that described for windows.

In the case of the application for solar panels, Figure 1 would correspond to a folded configuration of the system, with only one solar panel being exposed and the others drawn in behind it. In that configuration, the concealed panels are protected from the elements, thereby increasing their service life. Figure 3 would correspond to a maximum solar capture surface configuration, with the system of panels in the completely expanded configuration and all the panels contributing to capture. Finally, Figure 2 would correspond to an intermediate configuration, in which two thirds of the maximum available capture surface would be exposed.

## Claims

1. A coupling device for coupling at least two elements, comprising:
a first casing (1.1) intended to be attached to a first element (2.1) and comprising guiding means, where the guiding means comprise a sliding guide (3) providing a sliding travel path,
a second casing (1.2) intended to be attached to a second element (2.2), and
casing connection means comprising a connecting element (4) having a first end (9) pivotally arranged in the sliding guide (3) of the first casing (1.1) and slidably arranged along the sliding travel path, and a second end (10) pivotally fixed to the second casing (1.2), the coupling device being equipped with binding means adapted to prevent rotation of the connecting element (4) on its first end (9) during the sliding travel path,
wherein:
in a start of travel position of the connecting element (4) on the sliding guide (3), the first casing (1.1) and second casing (1.2) are arranged one after the other in a first stacking direction (z), giving rise to a folded configuration of the coupling device, and
in an end of travel position of the connecting element (4) on the sliding guide (3), the rotation of the connecting element (4) on its first end (9) and second end (10) allows movement of the second casing (1.2) to at least a position in which the first casing (1.1) and second casing (1.2) are arranged in a substantially coplanar manner one after the other in a second direction (x), giving rise to an expanded configuration of the coupling device.

2. The coupling device according to the preceding claim adapted to coupling n elements, with n>2, comprising n-2 additional casings and n-2 additional casing connection means, wherein
each casing is intended to be attached to a corresponding element,
the i-th casing, with i=2, ... n-1, comprises guiding means, where the guiding means comprise a sliding guide (3) providing a sliding travel path,
the i-th casing connection means comprise a connecting element (4) having a first end (9) pivotally arranged in the sliding guide (3) of the i-th casing and slidably arranged along the sliding travel path, and a second end (10) pivotally fixed to the (i+1)-th casing, with i=2, ... n-1, the coupling device being equipped with binding means adapted to prevent rotation of each connecting element (4) on its first end (9) during the sliding travel path,
wherein:
in a start of travel position of the connecting element of the i-th casing connection means on the sliding guide (3), the i-th and (i+1)-th casings are arranged one after the other in a first direction (z), giving rise to a folded configuration of said casings, and
in an end of travel position of the connecting element of the i-th casing connection means on the sliding guide (3), the rotation of the connecting element on its first end (9) and second end (10) allows movement of the (i+1)-th casing to at least a position in which the i-th and (i+1)-th casings are arranged in a substantially coplanar manner one after the other in a second direction (x), giving rise to an expanded configuration of said casings, with i=2, ... n-1.

3. The coupling device according to any of the preceding claims, wherein
the guiding means comprise a second sliding guide (30) parallel to the first sliding guide (3) and providing a sliding travel path, and wherein
the i-th casing connection means comprise a second connecting element (40) having a first end (9) pivotally arranged in the second sliding guide (30) of the i-th casing and slidably arranged along the sliding travel path thereof, and a second end (10) pivotally fixed to the (i+1)-th casing, with i=1, ... n-1, the coupling device being equipped with binding means adapted to prevent rotation of the second connecting element (40) on its first end (9) during the sliding travel path, and the second connecting element (40) being fixed to the (i+1)-th casing at a point that is shifted in the direction defined by the sliding guides in relation to the fixing point of the first connecting element (4) in said casing,
the two connecting elements (4, 40) of connection means being fixed to one another such that they slide simultaneously on the respective sliding guides (3, 30) of a casing and with relative shifting of one connecting element (4, 40) with respect to the other connecting element (4, 40) in the direction defined by the sliding guides (3, 30).

4. The coupling device according to any of the preceding claims, wherein the connecting element (4, 40) is a connecting rod connected at its first end (9) to a casing (1.1, 1.2) by means of a first shaft, slidably arranged on the sliding guide (3, 30) and pivotally fixed at its second end (10) to the contiguous casing (1.2, 1.3) by means of a second shaft.

5. The coupling device according to claims 3 and 4, wherein the two connecting elements of the casing connection means are connecting rods (4, 40) connected to one another by means of a dual shaft (17), and wherein the connection means additionally comprise two side fastening elements (22) one of which being coupled to each shaft of the dual shaft (17), after the corresponding connecting rod.

6. The coupling device according to any of the preceding claims, wherein the sliding guide (3, 30) comprises a groove which the corresponding connecting element (4, 40) goes through, and at least one edge on which the first end of the connecting element is supported.

7. The coupling device according to any of the preceding claims, wherein the binding means adapted to prevent rotation of the connecting element (4, 40) during the sliding travel path comprise a channel (15) provided in the connecting element (4, 40) and a track (20) provided in the casing, the track (20) being configured for being inserted in said channel (15), such that during the sliding travel path the movement of the connecting element (4, 40) is limited to the direction defined by the track (20).

8. The coupling device according to any of the preceding claims, additionally comprising:
fixing means configured for fixing contiguous casings when they are in the expanded configuration, and/or
holding means for holding the connecting element in a start of travel position.

9. The coupling device according to claim 8, wherein
the fixing means for fixing contiguous casings comprise a fixing projection (21) provided in at least one of the casings which are equipped with at least one sliding guide and a fixing channel (16) made in the connecting element the first end of which is arranged in the sliding guide of said casing, such that inserting the fixing projection (21) into the fixing channel (16) prevents rotation of the connecting element with respect to its first end, and/or
the holding means comprise at least one rib (8, 80) arranged in at least one sliding guide (3, 30).

10. The coupling device according to any of the preceding claims, wherein at least one of the casings to which the second end (10) of a connecting element (4, 40) is fixed comprises a guiding groove (14), a spiral spring (18) and a sliding cover (19),
the sliding cover (19) being slidably arranged along the guiding groove (14) and coupled to the spiral spring (18),
the spiral spring (18) being fixed to the casing at a point arranged in relation to the fixing point of the second end (10) of the connecting element (4, 40) such that the sliding cover (19) is interposed in the path of rotation of the connecting element on its second end (10), and the spiral spring (18) being preloaded to apply force towards a closed position, in which the sliding cover (19) is arranged covering the second end (10) of the connecting element (4, 40).

11. The coupling device according to any of the preceding claims, wherein at least one of the casings is configured in the form of two separate mutually connectable parts.

12. A system comprising a coupling device according to any of the preceding claims and at least two elements, wherein the number of casings of the coupling device is equal to the number of elements, and wherein each casing of the coupling device is attached to one of the elements at a first end thereof.

13. The system according to claim 12, comprising a second coupling device according to any of claims 1 to 11, wherein the number of casings of the second coupling device is equal to the number of elements, and wherein each casing of the second coupling device is attached to one of the elements, at the end of the element opposite the first end to which the corresponding casing of the first coupling device is attached.

14. The system according to claim 12 or 13, wherein:
at least one of the casings forms a single part with the element to which it is attached, and/or
at least one of the casings is configured in the form of two separate mutually connectable parts, and one of said parts forms a single part with the element to which it is attached, and/or
at least one of the casings is attached to the corresponding element by fixing means.

15. The system according to any of claims 12 to 14, wherein the elements are selected from the group consisting of:
screens, doors, windows, solar panels and architectural panels.
